# EUROPÄISCHE PATENTSCHRIFT

(11) **EP 3 027 981 B1**
(45) Veröffentlichungstag und Bekanntmachung des Hinweises auf die Patenterteilung: **26.05.2021**
(21) Anmeldenummer: 14744330.3
(22) Anmeldetag: 28.07.2014
(51) Int. Cl.: F25B 35/04, F25B 37/00, F25B 17/08, F25B 39/02, F25B 39/04

(54) **ADSORPTIONSMODUL**
ADSORPTION MODULE
MODULE D'ADSORPTION

(30) Priorität: 31.07.2013 DE 102013012792; 25.07.2014 DE 102014110509
(43) Veröffentlichungstag der Anmeldung: 08.06.2016
(73) Patentinhaber: Fahrenheit GmbH, 80803 München (DE)
(72) Erfinder: DASSLER, Ingo, 06110 Halle (DE); MITTELBACH, Walter, 79111 Freiburg im Breisgau (DE)
(74) Vertreter: Meissner Bolte Partnerschaft mbB
(86) Internationale Anmeldenummer: PCT/EP2014/066135
(87) Internationale Veröffentlichungsnummer: WO 2015/014772

(56) Entgegenhaltungen:
- WO-A1-03/087682
- WO-A1-2007/068481
- DE-A1- 19 818 807

## Beschreibung

Die Erfindung betrifft ein Adsorptionsmodul, bestehend aus mindestens einer Sorptionseinheit und mindestens einer Verdampfer-/Kondensatoreinheit mit jeweiligen Anschlüssen zur Zu- und Abführung eines fluiden Wärmeträgermediums, wobei die genannten Einheiten in getrennten oder einem gemeinsamen, vakuumdichten Gehäuse befindlich sind, gemäß Oberbegriff des Anspruchs 1.

Aus der DE 10 2007 012 113 A1 ist eine kompakte Sorptionskälteeinrichtung vorbekannt, umfassend mindestens eine Adsorber-Desorber-Einheit mit Wärmetauscher und Sorptionsmaterial sowie mindestens einen Kondensator-Wärmetauscher und einen Verdampfer-Wärmetauscher. Die vorgenannten Baueinheiten befinden sich in einem gemeinsamen, vakuumdichten metallischen Außengehäuse. Weiterhin sind Anschluss- und Verbindungselemente sowie Rohrdurchführungen zum hydraulischen Verschalten und zum Betrieb der Einrichtung vorhanden.

Die vorbekannte Lösung zielt auf eine Sandwichstruktur, wobei die mindestens eine Adsorber-Desorber-Einheit sich in einem Innen- oder Teilinnengehäuse befindet.

Eine Sorptionsvorrichtung zur Klimatisierung von Fahrzeuginnenräumen ist aus der DE 198 18 807 A1 bekannt. Diese Sorptionsvorrichtung umfasst eine Vielzahl von in einem Gehäuse angeordneten Sorptionselementen, zwischen denen Luftkanäle gebildet sind. Innerhalb des Gehäuses wird ein Adsorber/Desorber-Bereich und ein Verdampfer/Kondensator-Bereich gebildet. Die Sorptionselemente sind im Wesentlichen als Scheiben ausgebildet und zu einem in dem Gehäuse unbeweglich gehaltenen Stapel mit den dazwischen verlaufenden Luftkanälen zusammengesetzt.

Aus dem Vorgenannten ist es Aufgabe der Erfindung, ein weiterentwickeltes Adsorptionsmodul für multifunktionale Anwendung im Bereich der Kältetechnik anzugeben, das über eine optimale Wärmeanbindung verfügt und entsprechend dem jeweiligen Anwendungsfall zu einem Aggregat fügbar ist, wodurch sich eine Steigerung der Energieeffizienz entsprechend ausgerüsteter Sorptionsanlagen zur Wärme- oder Kälteerzeugung bzw. zur Speicherung ergibt. Die diesbezügliche Fertigungstechnik soll optimiert werden, so dass die Herstellungskosten entsprechender Adsorptionsmodule im Vergleich zum Stand der Technik gesenkt werden können.

Die Lösung der Aufgabe der Erfindung erfolgt durch ein Adsorptionsmodul gemäß der Merkmalskombination nach Anspruch 1, wobei die Unteransprüche mindestens zweckmäßige Ausgestaltungen und Weiterbildungen darstellen.

Es wird demnach von einem Adsorptionsmodul, bestehend aus mindestens einer Sorptionseinheit und mindestens einer Verdampfer-/Kondensatoreinheit mit jeweiligen Anschlüssen zur Zu- und Abführung eines fluiden Wärmeträgermediums ausgegangen, wobei die genannten Einheiten in getrennten oder einem gemeinsamen, vakuumdichten Gehäuse befindlich sind.

Das erfindungsgemäße Adsorptionsmodul wird nach der Bauweise eines Plattenwärmeübertragers ausgeführt, d.h. das Gehäuse ist plattenförmig ausgebildet. Eine Vielzahl von plattenförmigen Gehäusen können zu einer Stapelanordnung gefügt werden, welche einen gemeinsamen Dampfkanal aufweist.

Die Gehäuse können als monolithisch gegossene Module mit geordneten Strömungsdurchlässen, aber auch als monolithisch gegossene, poröse Gebilde ausgeführt werden.

Denkbar sind darüber hinaus Module aus einem aluminiumschwammartigen Material oder Module, die in einem Sinterprozess entstanden sind.

Erfindungsgemäß besteht also die Sorptionseinheit aus einer monolithisch gegossenen oder gesinterten, dreidimensionalen metallischen, insbesondere Aluminiumstruktur mit einer Vielzahl von in Strömungsdurchlassrichtung des Wärmeträgermediums orientierten Durchbrüchen.

Die Sorptionseinheit ist erfindungsgemäß mit Zeolith oder, nicht entsprechend der Erfindung, mit anderen Adsorbenzien beschichtet.

Erfindungsgemäß findet eine Zeolithbeschichtung statt, die durch in-situ Aufkristallisation erfolgt. Hierbei werden dem metallischen Substrat gezielt Atome entnommen und in die Zeolithschicht eingebaut.

Bei einer Ausgestaltung der Erfindung umfasst das Adsorptionsmodul eine Baugruppe, welche jeweils mindestens eine Sorptionseinheit oder mindestens eine Verdampfer-/Kondensatoreinheit enthält, wobei diese jeweils einen integralen Dampfkanal besitzen, der bei Bildung einer Stapelanordnung zu einem durchgehenden Kanal gefügt werden kann.

Zur Leistungsskalierung kann eine Variation der Anzahl der plattenförmigen Gehäuse innerhalb der Stapelanordnung vorgenommen werden.

Die metallische Struktur der Sorptionseinheit wird quasi unmittelbar als Bestandteil des eigentlichen Gehäuses in einem einzigen Herstellungsprozess, beispielsweise einem Gieß- oder Sinterprozess ausgebildet, so dass ein langfristig stabiler Wärmeübergang durch die Vermeidung von zusätzlichen Verbindungsschritten, wie z.B. Kleben, Schweißen, Löten, Schrauben oder dergleichen gegeben ist. Die Strukturen der Durchbrüche können frei gewählt werden, und zwar bedingt durch die bevorzugte Gieß- oder Sintertechnologie.

Zum besseren Verständnis der Erfindung wird auf eine, nicht zur Erfindung gehörige Ausführungsformeines plattenförmigen Gehäuses verwiesen, das aus Blechen besteht. Die Bleche weisen bevorzugt geprägte, nockenartige Vorsprünge auf. Mindestens ein Paar von Blechen mit einander gegenüberliegenden Vorsprüngen wird dann so zu einem Gehäuse verbunden, dass ein Raum für das Wärmeträgermedium entsteht. Diesbezüglich bilden die Vorsprünge Abstandshalter zwischen den Blechen. Da die Vorsprünge nicht linienartig, sondern nur punktuell, z.B. in Form von Kegelstümpfen oder Pyramidenstümpfen realisiert werden, kann das Wärmeträgermedium ungehindert im entsprechenden Raum strömen und in Kontakt mit den Blechen gelangen. Die Anzahl und Art der Prägungen, d.h. der Vorsprünge, dient dabei nicht nur der Sicherung der Lage der Bleche zueinander, sondern auch der Erhöhung und Verbesserung des Wärmeübergangs zwischen den Blechen und dem Wärmeträgermedium bzw. umgekehrt.

Bei einer weiteren, nicht zur Erfindung gehörigen Ausführungsform bestehen die plattenförmigen Gehäuse aus paarweise zueinander gefügten, offenen Profilplatten. Die Profilplatten weisen einen im Wesentlichen U-förmigen Querschnitt auf. Die U-Schenkel der jeweiligen Profilplatten weisen zueinander und bilden am Schenkelende einen Fügeabschnitt. Die Verbindung der Profilplatten kann z.B. stoffschlüssig, d.h. mittels Kleben, Löten oder Schweißen, aber auch kraftschlüssig unter Nutzung einer eingesetzten Dichtung und klammerartigen Befestigungsteilen erfolgen.

Durch die zueinander weisenden U-förmigen Profilplatten entsteht auch hier ein Raum für das Wärmeträgermedium.

Die mit dem Wärmeträgermedium in Kontakt kommenden Bereiche der Profilplatten können eine die Wärmeübertragungseigenschaften verbessernde oberflächenvergrößernde Strukturierung besitzen.

Die nicht mit dem Wärmeträgermedium in Kontakt kommenden Bereiche können mit einer porösen Beschichtung versehen sein.

Bei einer ebenfalls nicht zur Erfindung gehörigenAusführungsform sind die plattenförmigen Gehäuse aus einem Strangpressprofil bestehend. Das Strangpressprofil weist eine Vielzahl von Kanälen zur Bildung eines Raums für das Wärmeträgermedium auf.

Mindestens eine der Gehäuseaußenseiten der jeweiligen plattenförmigen Gehäuse kann zum verbesserten Wärmeaustausch mit der Umgebung eine Verrippung oder ähnliche oberflächenvergrößernde Struktur besitzen.

Die Erfindung soll nachstehend anhand eines Ausführungsbeispiels sowie unter Zuhilfenahme von Figuren näher erläutert werden.

Hierbei zeigen:
- Fig. 1: eine erste Ausführungsform des erfindungsgemäßen Moduls in Seitenansicht sowie Draufsicht und
- Fig. 2: eine zweite Ausführungsform in Seitenansicht und Draufsicht, wobei der Dampfkanal des Einzelmoduls offen ist und bei einer Stapelanordnung mehrerer Module zu einem geschlossenen Dampfkanal fügbar ist.

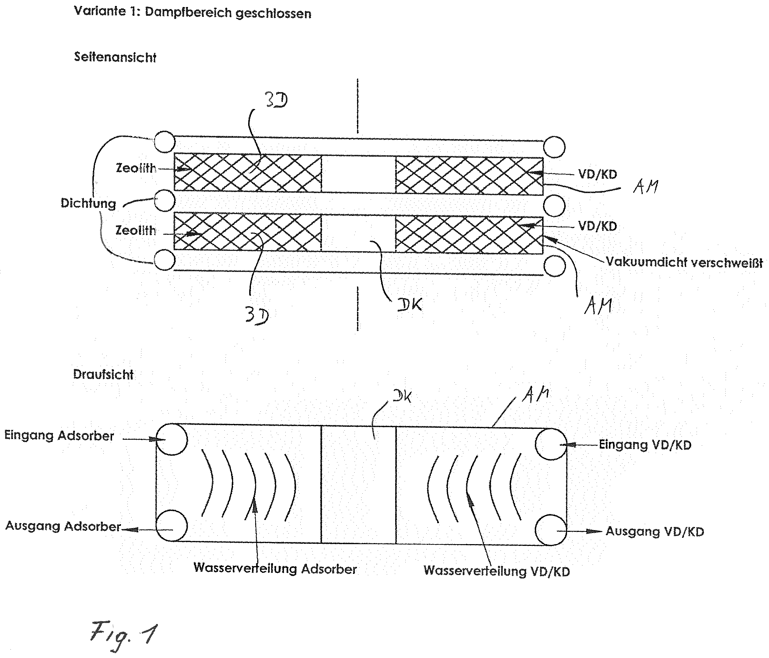

Der der Erfindung und damit den Ausführungsbeispielen zugrunde liegende Gedanke besteht darin, das plattenförmige Gehäuse selbst zu einer aktiven Komponente des Adsorptionsmoduls zu machen, insofern, dass mindestens Teile des Gehäuses Bestandteil der Sorptionseinheit sind. Lediglich Anschlüsse für das Wärmeträgermedium sind noch am Modul anzubinden und es ist bei einer Stapelanordnung wie z.B. in der Seitenansicht nach Fig. 1 gezeigt, für Dichtmittel zu sorgen, so dass sich der Dampfkanal DK ausbildet.

Das einzelne Adsorptionsmodul AM besteht aus einem plattenförmigen Gehäuse, wobei die metallische Struktur der Sorptionseinheit mit dem Gehäuse einstückig ausgebildet ist, z.B. in Form eines Guss- oder Sinterteils.

Diesbezüglich kann das Gehäuse des Adsorptionsmoduls AM aus einem Aluminiummaterial bestehen, das ausgehend von der Außenseite in eine solche Struktur übergeht, die eine Vielzahl von in Strömungsdurchlassrichtung des Wärmeträgermediums orientierte Durchbrüche umfasst. Mit VD/KD ist in den Figuren der Verdampfer bzw. Kondensator gekennzeichnet. Die Wasserverteilung für den Adsorber bzw. für den Verdampfer und Kondensator ist in der Draufsicht nach Fig. 1 mit gebogenen Linien symbolisiert. Bei den Darstellungen gemäß Ausführungsbeispiel wird davon ausgegangen, dass auf der dreidimensionalen Struktur 3D eine Zeolithschicht als Adsorbenz aufgebracht wurde, die erfindungsgemäß in-situ aufkristallisiert wird.

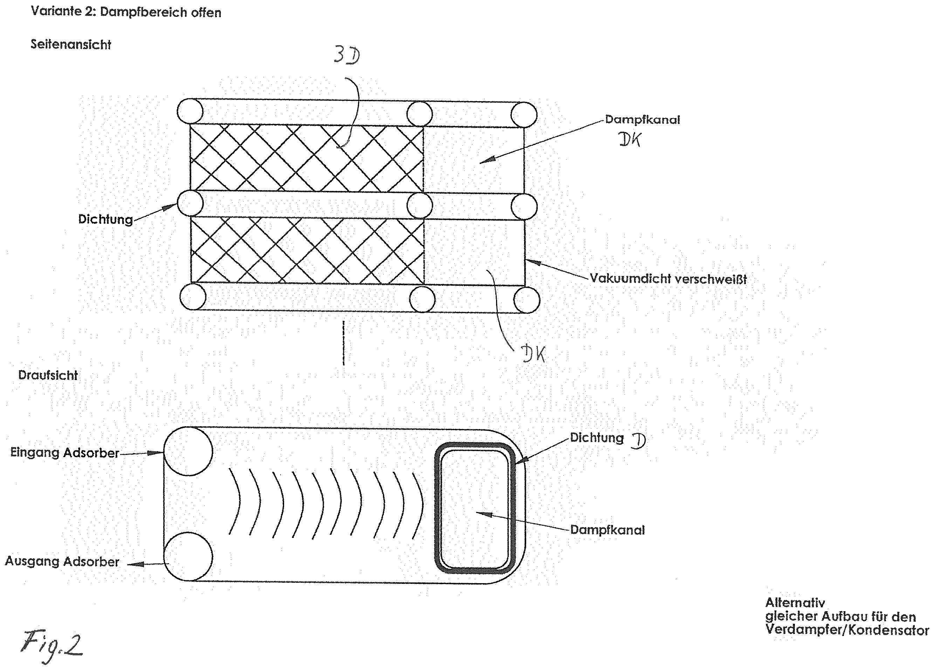

Bei der Ausführungsform eines Adsorptionsmoduls nach Fig. 2 ist jedes Einzelmodul bezogen auf den Dampfkanal DK offen. Beim Ausbilden einer Stapelanordnung (siehe Seitenansicht nach Fig. 2) liegen die Dampfkanäle DK übereinander zur Bildung eines dann durchgehenden Dampfkanals, wobei zwischen den einzelnen Dampfkanälen des jeweiligen Moduls eine Dichtung D angeordnet ist.

Die Einzelmodule können als monolithisch gegossene, geordnete Aluminiummodule, aber auch als monolithisch gegossene, poröse Aluminiummodule realisiert werden. Denkbar sind weiterhin gegossene Aluminiumschwammmodule oder aus Kugeln, Pulver oder Fasern gesinterte Aluminiummodule.

Mittels der erfindungsgemäßen Technik können unter Rückgriff auf die Adsorptionsmodule Kältemaschinen oder Wärmepumpen, aber auch Kälte- oder Wärmespeicher realisiert werden, wobei für Wärmespeicher die Ausführungsform nach Fig. 2 prädestiniert ist.

Bei weiteren bekannten und nicht zur Erfindung zugehörigen Ausführungsformen, die nicht figürlich dargestellt sind , besteht die Möglichkeit, die plattenförmigen Gehäuse aus einzelnen Blechen zu realisieren, wobei die Bleche eine noppenartige, geprägte Struktur in Form von einzelnen oder gruppenartig angeordneten Vorsprüngen besitzen. Jeweils mindestens ein Paar von Blechen mit einander gegenüberliegenden Vorsprüngen werden dann zu einem Gehäuse, z.B. durch Verpressen oder stoffschlüssig verbunden derart, dass ein Raum für das Wärmeträgermedium entsteht und diesbezüglich die Vorsprünge Abstandshalter zwischen den Blechen bilden. Damit kommt den Vorsprüngen zum einen eine stabilisierende Funktion der jeweiligen plattenförmigen Gehäuse zu. Zum anderen erfüllen die Noppen die Funktion der Vergrößerung des für den Wärmeübergang maßgeblichen Bereichs. Die Bleche können, wenn erforderlich, unmittelbar mit einem Zeolithmaterial beschichtet werden.

Weiterhin kann das Gehäuse gemäß einer nicht zur Erfindung zugehörigen Möglichkeit, aus paarweise zueinander gefügten, offenen, relativ starren Profilplatten bestehen.

Die Profilplatten besitzen einen im Wesentlichen U-förmigen Querschnitt mit kurzen U-Schenkeln und relativ breit ausgebildetem Verbindungsschenkel. Die U-Schenkel eines Profilplattenpaars weisen zueinander und stellen einen Fügeabschnitt dar, derart, dass ein Raum für das Wärmeträgermedium entsteht.

Die mit dem Wärmeträgermedium in Kontakt kommenden Bereiche der Profilplatten können eine oberflächenvergrößernde Strukturierung, z.B. erzeugt durch Fräsen oder Ätzen besitzen.

Bei einer ebenfalls nicht zur Erfindung zugehörigen Möglichkeit können die plattenförmigen Gehäuse aus Strangpressprofilen relativ kostengünstig erzeugt werden. Das das jeweilige Gehäuse bildende Strangpressprofil weist dabei eine Vielzahl von Kanälen zur Bildung eines Raums für das Wärmeträgermedium auf.

Mindestens eine Gehäuseaußenseite kann eine Verrippung zur Verbesserung des Wärmebergangs zur Umgebung besitzen.

Die Einzelgehäuse gemäß den vorstehend beschriebenen Ausführungsbeispielen können dann zu einem Gesamtmodul gefügt und mit einer vakuumdichten Hülle umgeben werden. Entsprechende Anschlüsse für das Wärmeträgermedium können in bekannter Weise ausgeführt werden.

Die aus mehreren plattenförmigen Gehäusen gebildeten Module können einzeln oder im Verbund vakuumseitig mit einer Beschichtung in Form eines offenporigen schwammartigen Aluminiumkörpers versehen sein. Die Beschichtung kann auch als monolithischer Block ausgeführt werden und dann stoffschlüssig oder formschlüssig mit dem oder den plattenförmigen Gehäusen verbunden werden. Eine bevorzugte Variante besteht darin, den porösen vakuumseitigen Teil mit Zeolith zu beschichten und anschließend eine stoffschlüssige Verbindung, z. B. durch Löten mit dem Hydraulikteil, d. h. dem Modulteil, welches das Wärmeträgermedium aufnimmt, herzustellen.

## Patentansprüche

1. Adsorptionsmodul, bestehend aus mindestens einer Sorptionseinheit und mindestens einer Verdampfer-/Kondensatoreinheit mit jeweiligen Anschlüssen zur Zu- und Abführung eines fluiden Wärmeträgermediums, wobei die genannten Einheiten in getrennten oder einem gemeinsamen, vakuumdichten Gehäuse befindlich sind, wobei
das Gehäuse plattenförmig ausgebildet ist und eine Vielzahl von plattenförmigen Gehäusen zu einer Stapelanordnung fügbar sind, welche einen gemeinsamen Dampfkanal aufweist,
**dadurch gekennzeichnet, dass**
das plattenförmige Gehäuse selbst zu einer aktiven Komponente des Adsorptionsmoduls gemacht ist, sodass mindestens Teile des Gehäuses Bestandteil der Sorptionseinheit sind,
mindestens die Sorptionseinheit aus einer monolithischen gegossenen oder gesinterten dreidimensionalen metallischen Struktur mit einer Vielzahl von in Strömungsdurchlassrichtung des Wärmeträgermediums orientierten Durchbrüchen besteht, wobei die Strukturen der Durchbrüche durch die Gieß- oder Sintertechnologie frei wählbar sind, auf der dreidimensionalen Struktur eine in innigem Kontakt mit dieser stehende Zeolithschicht befindlich ist, welche in-situ aufkristallisiert wird und dem metallischen Substrat gezielt hierbei Atome entnommen und in die Zeolithschicht eingebaut sind und die metallische Struktur Bestandteil des jeweiligen plattenförmigen Gehäuses ist.

2. Adsorptionsmodul nach Anspruch 1,
**dadurch gekennzeichnet, dass**
mindestens eine Gehäuseaußenseite eine Verrippung oder dergleichen Struktur zur Oberflächenvergrößerung aufweist.

3. Adsorptionsmodul nach einem der vorangegangenen Ansprüche,
**gekennzeichnet durch**
eine Baugruppe, welche jeweils mindestens eine Sorptionseinheit oder mindestens eine Verdampfer-/Kondensatoreinheit enthält, wobei diese jeweils einen integralen Dampfkanalabschnitt besitzen, der bei Bildung einer Stapelanordnung zu einem durchgehenden Kanal fügbar ist.

4. Adsorptionsmodul nach einem der Ansprüche 1 oder 3,
**dadurch gekennzeichnet, dass**
die monolithische dreidimensionale gegossene oder gesinterte metallische Struktur auf Aluminium basiert.

5. Adsorptionsmodul nach Anspruch 4,
**dadurch gekennzeichnet, dass**
die Struktur als Guss- oder Sinterkörper mit der Vielzahl von Durchbrüchen ausgebildet ist.

6. Adsorptionsmodul nach Anspruch 5,
**dadurch gekennzeichnet, dass**
der Guss- oder Sinterkörper eingegossene Sammler oder Rohre aufweist.

7. Adsorptionsmodul nach einem der vorangegangenen Ansprüche,
**dadurch gekennzeichnet, dass**
eine Leistungsskalierung über die Anzahl der plattenförmigen Gehäuse innerhalb der Stapelanordnung realisierbar ist.

8. Adsorptionsmodul nach Anspruch 1,
**dadurch gekennzeichnet, dass**
die Zeolithstruktur ein mikroporöses SAPO-Material, ein mikroporöses ALPO-Material oder ein mikroporöses Me-ALPO-Material darstellt und Kristalle aufweist, die in ihrer Haupt- und Wachstumsrichtung im Wesentlichen senkrecht zur metallischen Strukturoberfläche orientiert sind.

## Claims

1. An adsorption module comprised of at least one sorption unit and at least one evaporator/condenser unit having respective ports for feeding and discharging a fluid heat transfer medium, said units being located in separate housings or a common vacuum-tight housing, wherein
the housing is formed to be plate-shaped, and a plurality of plate-shaped housings can be joined to a stacked arrangement which has a common steam duct,
**characterized in that**
the plate-shaped housing itself is made to be an active component of the adsorption module, so that at least parts of the housing are integral parts of the sorption unit,
at least the sorption unit is comprised of a monolithic, cast or sintered three-dimensional metallic structure having a plurality of breakthroughs oriented in the flow passage direction of the heat transfer medium, wherein the structures of the breakthroughs are freely selectable by the casting or sintering technology, on the three-dimensional structure, a zeolite layer being in close contact with same is located, which is crystallized in situ, and hereby atoms are extracted from the metallic substrate in a targeted manner and incorporated in the zeolite layer, and the metallic structure is an integral part of the respective plate-shaped housing.

2. The adsorption module according to claim 1,
**characterized in that**
at least one external side of the housing has a ripping or similar structure for enlarging the surface area.

3. The adsorption module according to any one of the preceding claims,
**characterized by**
an assembly including at least one sorption unit or at least one evaporator/condenser unit each having an integral steam duct portion which can be joined to a continuous duct when a stacked arrangement is formed.

4. The adsorption module according to any one of claims 1 or 3,
**characterized in that**
the monolithic three-dimensional cast or sintered metallic structure is based on aluminum.

5. The adsorption module according to claim 4,
**characterized in that**
the structure is realized as a cast or sintered body having a plurality of breakthroughs.

6. The adsorption module according to claim 5,
**characterized in that**
the cast or sintered body comprises collectors or tubes molded during casting.

7. The adsorption module according to any one of the preceding claims,
**characterized in that**
output scaling can be realized via the number of plate-shaped housings within the stacked arrangement.

8. The adsorption module according to claim 1,
**characterized in that**
the zeolite structure represents a microporous SAPO material, a microporous ALPO material or a microporous Mi-ALPO material and comprises crystals oriented in their main and growth directions substantially perpendicular to the surface of the metallic structure.

## Revendications

1. Module d'adsorption, constitué d'au moins une unité de sorption et d'au moins une unité d'évaporation/condensation comprenant des connexions respectives pour l'alimentation et l'évacuation d'un fluide caloporteur, lesdites unités étant situées dans des boîtiers séparés ou dans un boîtier commun, étanche(s) au vide,
dans lequel
le boîtier est réalisé en forme de plaque et une pluralité de boîtiers en forme de plaque peuvent être assemblés pour former un agencement empilé qui présente un canal de vapeur commun,
**caractérisé en ce que**
le boîtier en forme de plaque est lui-même un composant actif du module d'adsorption, de sorte qu'au moins certaines portions du boîtier font partie de l'unité de sorption,
au moins l'unité de sorption est constituée par une structure métallique tridimensionnelle monolithique coulée ou frittée ayant une pluralité de traversées orientées dans la direction de passage d'écoulement du fluide caloporteur,
les structures des traversées peuvent être choisies librement par la technologie de coulée de frittage,
une couche de zéolite est située sur la structure tridimensionnelle en contact intime avec celle-ci et est cristallisée in situ, et
ainsi, des atomes sont prélevés de façon ciblé dans le substrat métallique et sont incorporés dans la couche de zéolite, et
la structure métallique fait partie du boîtier respectif en forme de plaque.

2. Module d'adsorption selon la revendication 1,
**caractérisé en ce que**
au moins une face extérieure du boîtier présente un nervurage ou une structure similaire pour augmenter la surface.

3. Module d'adsorption selon l'une des revendications précédentes,
**caractérisé par**
un groupe structurel comprenant au moins une unité de sorption ou au moins une unité d'évaporation/condensation, respectivement, celles-ci comprenant chacune une portion de canal de vapeur intégrale qui peut être assemblée pour donner un canal continu lors de la formation d'un agencement empilé.

4. Module d'adsorption selon l'une quelconque des revendications 1 ou 3,
**caractérisé en ce que**
la structure métallique tridimensionnelle monolithique, coulée ou frittée, est à base d'aluminium.

5. Module d'adsorption selon la revendication 4,
**caractérisé en ce que**
la structure est réalisée sous forme de corps coulé ou fritté ayant la pluralité de traversées.

6. Module d'adsorption selon la revendication 5,
**caractérisé en ce que**
le corps coulé ou fritté comporte des collecteurs ou des tubes intégrés par coulée.

7. Module d'adsorption selon l'une des revendications précédentes,
**caractérisé en ce que**
une mise à l'échelle de la performance est réalisable par le biais du nombre de boîtiers en forme de plaque à l'intérieur de l'agencement empilé.

8. Module d'adsorption selon la revendication 1,
**caractérisé en ce que**
la structure zéolithique représente un matériau SAPO microporeux, un matériau ALPO microporeux ou un matériau Me-ALPO microporeux, et présente des cristaux dont la direction principale et la direction de croissance sont orientées sensiblement perpendiculairement à la surface métallique de la structure.
